# DEMANDE DE BREVET EUROPEEN

(11) **EP 2 022 704 A1**
(43) Date de publication de la demande: **11.02.2009**
(21) Numéro de dépôt: 08300229.5
(22) Date de dépôt: 25.06.2008
(51) Int. Cl.: B62D 21/15

(54) **Moyen de liaison pour l'assemblage de deux pièces mécaniques de structure d'un véhicule automobile**

(30) Priorité: 08.08.2007 FR 0705762
(71) Demandeur: Renault, 92109 Boulogne Billancourt (FR)
(72) Inventeur: Rollet, REMI, 91190, GIF SUR YVETTE (FR)

(57) **Abrégé**

Moyen de liaison (2' ; 2" ; 2'" ; 102 ; 202) comprenant une tôle (3' ; 3" ; 3"') munie d'un trou principal (10 ; 20 ; 30 ; 130 ; 230) destiné au passage d'une vis, caractérisé en ce que la tôle est munie de trous auxiliaires (11 ; 21 ; 31 ; 131 ; 231) répartis autour du trou principal, ces trous auxiliaires permettant de diminuer localement la rigidité de la tôle au voisinage du trou principal.

## Description

L'invention concerne un assemblage mécanique à rupture programmée, en particulier un assemblage mécanique dans lequel deux pièces sont maintenues en pression l'une contre l'autre par l'action d'un moyen de serrage tel qu'un boulon. L'invention concerne aussi un moyen de liaison permettant un tel assemblage.

Il est connu d'assembler deux pièces mécaniques grâce à un boulon maintenant celles-ci en pression l'une contre l'autre. Les pièces sont alors assemblées grâce au frottement se produisant entre les deux pièces. On connaît par exemple un assemblage mécanique destiné à lier un berceau de train avant 1 de véhicule automobile, représenté à la figure 1, à une caisse de ce véhicule automobile. Les moyens de liaison 2 conformés sur le berceau de train avant sont représentés plus en détail sur la figure 2. Ils comprennent notamment une tôle 3 dans laquelle est réalisé un trou 4. Cette tôle est représentée en vue de face à la figure 3. Ce trou 4 a une forme circulaire permettant le passage d'une vis 5 comme représenté en coupe à la figure 4. Un écrou 8 est vissé sur cette vis pour agir sur la tôle 3 via une rondelle 99. Ainsi, l'action combinée de la vis et de l'écrou permet de générer un effort de pression de la tôle 3 sur la caisse 9. L'assemblage est alors réalisé grâce aux efforts de frottement existant à l'interface tôle 3 - caisse 9.

Le problème posé par ce genre d'assemblage réside dans le fait qu'il existe une grande différence entre sa limite élastique et sa limite à la rupture. En effet, dans certaines applications, l'assemblage doit être robuste pour résister à de nombreuses sollicitations incidentelles d'intensité inférieure à la limite élastique tout en assurant que l'intensité de la sollicitation de rupture de l'assemblage soit aussi proche que possible de la limite élastique.

Dans le cas de l'assemblage de l'art antérieur décrit ci-dessus, la limite de rupture de l'assemblage est très supérieure à la limite élastique. Il existe par exemple typiquement un rapport de quatre entre ces valeurs.

Ainsi, lorsqu'on applique des sollicitations sur l'assemblage, la tôle se déforme d'abord à l'intérieur de son domaine élastique. Lorsqu'on augmente l'intensité des sollicitations, la tôle se déforme ensuite hors de son domaine élastique, c'est-à-dire dans son domaine plastique sans que toutefois l'assemblage ne se rompe. Si ce domaine plastique est étendu les limites élastiques et de ruptures sont très différentes.

Le but de l'invention est de fournir un assemblage mécanique remédiant aux inconvénients évoqués précédemment et améliorant les assemblages mécaniques connus de l'art antérieur. En particulier, l'invention propose un assemblage mécanique simple, peu coûteux et dont la sollicitation de rupture est proche de la limite élastique. En outre, l'invention propose un moyen de liaison muni d'un trou et destiné à faire partie d'un tel assemblage.

Le moyen de liaison selon l'invention comprend une tôle munie d'un trou principal destiné au passage d'une vis. Il est caractérisé en ce que la tôle est munie de trous auxiliaires répartis autour du trou principal, ces trous auxiliaires permettant de diminuer localement la rigidité de la tôle au voisinage du trou principal.

Les trous auxiliaires peuvent déboucher dans le trou principal.

Les trous auxiliaires peuvent avoir sensiblement des formes triangulaires isocèles dont les hauteurs sont orientées vers le centre du trou principal, ces hauteurs constituant un axe de symétrie des formes triangulaires.

Les trous auxiliaires peuvent être séparés du trou principal par des isthmes.

Les trous auxiliaires peuvent être régulièrement répartis autour du trou principal.

La tôle peut comprendre deux trous auxiliaires.

Les trous auxiliaires peuvent être inclus dans une zone circulaire centrée sur le trou principal et dont le rayon vaut au plus 4 fois le rayon du cercle circonscrit au trou principal.

L'assemblage mécanique selon l'invention comprend une première pièce munie d'un moyen de liaison défini précédemment et une deuxième pièce assemblée à la première grâce à l'action d'un moyen de maintien traversant le trou principal du moyen de liaison.

Le moyen de maintien peut être un boulon.

L'écrou du boulon ou la tête de la vis du boulon peut agir directement sur la tôle.

L'écrou du boulon ou la tête de la vis du boulon peut agir par l'intermédiaire direct d'une rondelle sur la tôle.

La rondelle peut avoir sensiblement le même diamètre que l'écrou du boulon ou la tête de la vis du boulon.

Le véhicule automobile selon l'invention comprend un assemblage mécanique défini précédemment.

Le dessin annexé représente, à titre d'exemples, différents modes de réalisation d'un moyen de liaison selon l'invention.

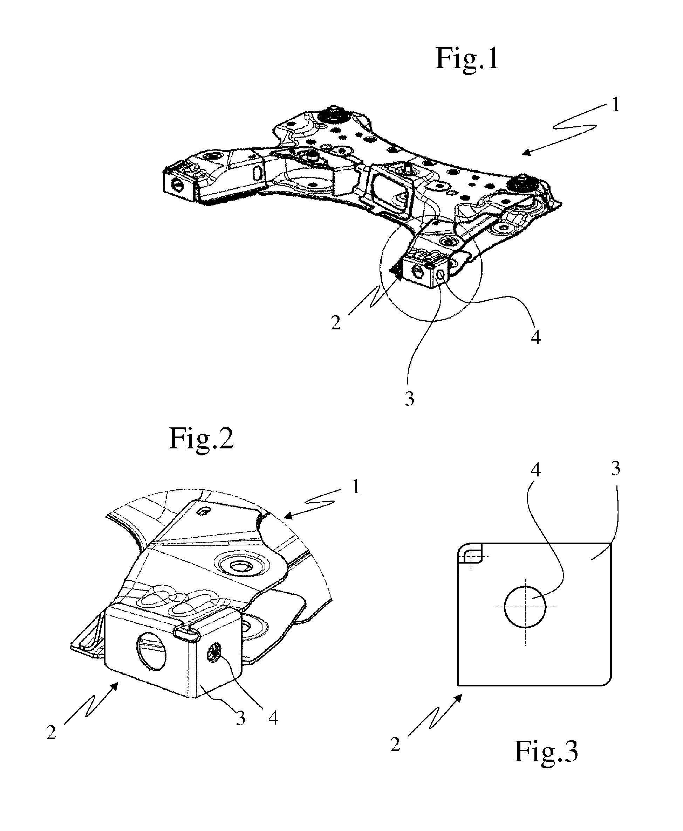

La figure 1 est une vue en perspective d'un berceau de train avant de véhicule automobile connu de l'art antérieur.
La figure 2 est une vue en perspective de détail du berceau de train avant de l'art antérieur au niveau de son moyen de liaison à une caisse (non représentée).
La figure 3 est une vue de face de détail d'une tôle trouée du berceau de train avant de l'art antérieur au niveau de son moyen de liaison à une caisse (non représentée).

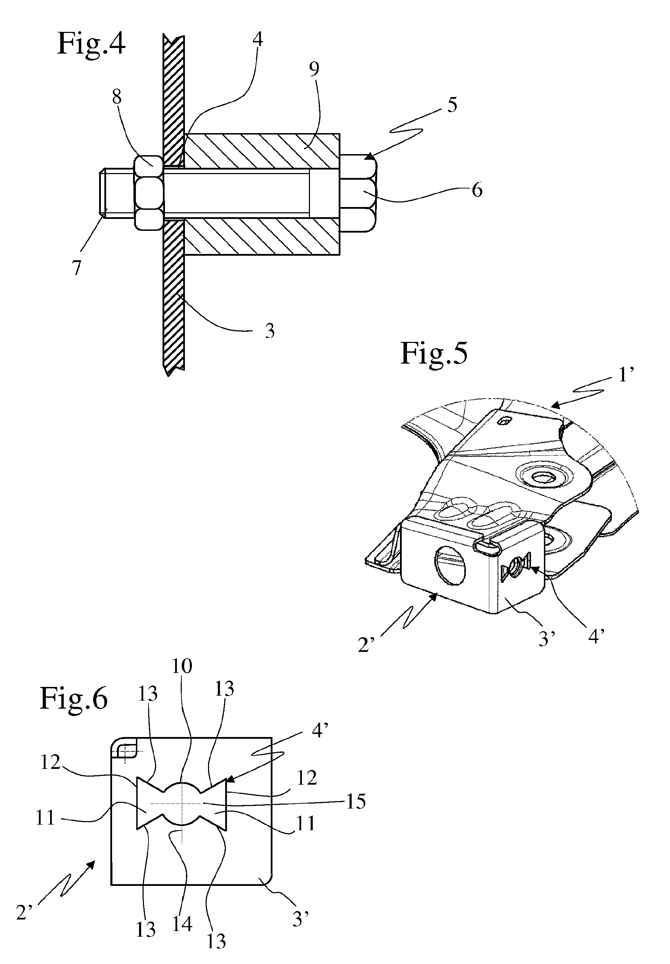

La figure 4 est une vue en coupe longitudinale d'un assemblage berceau de train avant - caisse connu de l'art antérieur, la tôle du berceau de train avant se trouvant non déformée.
La figure 5 est une vue en perspective de détail d'un premier exemple de mode de réalisation d'un moyen de liaison selon l'invention.
La figure 6 est une vue de face de détail du premier exemple de mode de réalisation du moyen de liaison selon l'invention.

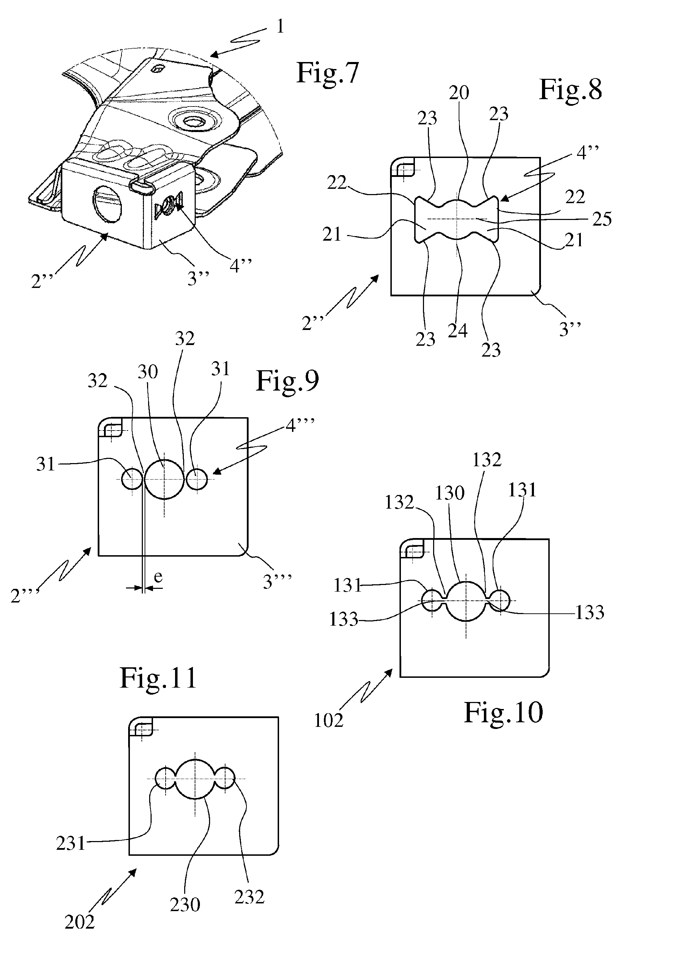

La figure 7 est une vue en perspective de détail d'un deuxième exemple de mode de réalisation d'un moyen de liaison selon l'invention.
La figure 8 est une vue de face de détail du deuxième exemple de mode de réalisation du moyen de liaison selon l'invention.
La figure 9 est une vue de face de détail d'un troisième exemple de mode de réalisation du moyen de liaison selon l'invention.
La figure 10 est une vue de face de détail d'un quatrième exemple de mode de réalisation du moyen de liaison selon l'invention.
La figure 11 est une vue de face de détail d'un cinquième exemple de mode de réalisation du moyen de liaison selon l'invention.

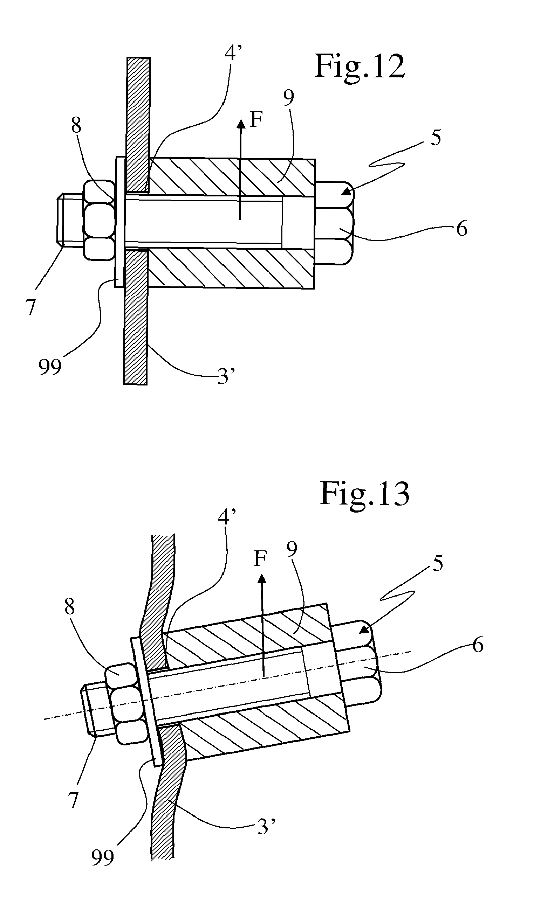

La figure 12 est une vue en coupe longitudinale d'un assemblage berceau de train avant - caisse comprenant un premier mode de réalisation du moyen de liaison selon l'invention, la tôle du berceau de train avant se trouvant non déformée.
La figure 13 est une vue en coupe longitudinale de l'assemblage berceau de train avant - caisse de la figure 12, la tôle du berceau de train avant se trouvant déformée dans son domaine élastique.

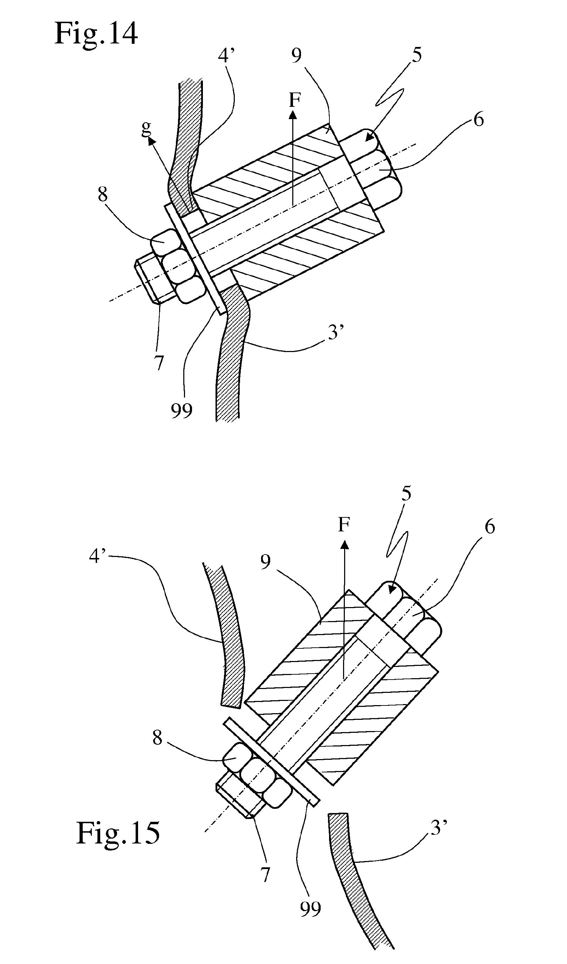

La figure 14 est une vue en coupe longitudinale de l'assemblage berceau de train avant - caisse de la figure 12, la tôle du berceau de train avant se trouvant déformée dans son domaine plastique.
La figure 15 est une vue en coupe longitudinale de l'assemblage berceau de train avant - caisse de la figure 12, la tôle du berceau de train avant se trouvant déformée de manière telle que l'assemblage est libéré.

Un premier exemple de mode de réalisation d'un moyen de liaison 2' selon l'invention est décrit ci-après en référence aux figures 5 et 6.

Ce moyen de liaison est solidaire d'un berceau de train avant 1' de véhicule automobile. Il est destiné à permettre l'assemblage d'un berceau de train avant à une caisse 9 du véhicule. Le moyen de liaison peut aussi bien évidemment être appliqué à l'assemblage de tous autres types de pièces.

Le moyen de liaison 2' comprend principalement une tôle 3'. Cette tôle est percée d'une ouverture 4'.

Un assemblage utilisant un tel moyen de liaison est décrit en référence à la figure 12. L'ouverture 4' permet le passage d'une vis 5. Un écrou 8 est vissé sur cette vis pour agir sur la tôle 3' via une rondelle 99. Ainsi, l'action combinée de la vis et de l'écrou permet de générer un effort de pression de la tôle 3' sur la caisse 9. L'assemblage est alors réalisé grâce aux efforts de frottement existant à l'interface tôle 3' - caisse 9.

L'ouverture 4' comprend un trou principal 10 de forme circulaire et deux trous auxiliaires 11 débouchant dans le trou principal. Le trou principal est centré sur l'intersection d'un axe vertical 14 et d'un axe horizontal 15. Ce trou principal est destiné à permettre le passage d'une vis non représentée.

Les deux trous auxiliaires sont disposés symétriquement par rapport au centre du trou principal. Ces trous auxiliaires ont des formes sensiblement triangulaires. Chacune de ces formes est limitée par trois segments 12 et 13. Le segment 12 forme des angles de 60° avec les segments 13 qui interceptent le trou principal. L'ensemble des éléments définissant l'ouverture 4' sont raccordés par des rayons de raccordement.

Dans le cas où le trou principal est destiné à recevoir une vis de 10 mm de diamètre, le trou principal peut présenter par exemple un premier diamètre, les segments 12 peuvent être à une première distance déterminée du centre du trou principal, les intersections entre le trou principal et les segments 13 peuvent être à une deuxième distance définie de l'axe horizontal et les rayons de raccordement peuvent présenter un rayon déterminé. Il est clair que l'ensemble de ces dimensions est notamment fonction du diamètre de la vis (et plus particulièrement de son diamètre de tête), de l'épaisseur de la tôle, de la matière constituant la tôle et de la rigidité et résistance souhaitées pour l'assemblage. Il est notamment à noter que l'augmentation des valeurs de distance entre les segments 12 et le centre du trou principal et de distance entre l'axe horizontal et les intersections entre le trou principal et les segments 13 a tendance à provoquer une diminution de la rigidité de la tôle au voisinage de l'ouverture 4'. De même, une augmentation de la valeur de l'angle formé entre les segments 12 et 13 a tendance à provoquer une diminution de la rigidité de la tôle au voisinage de l'ouverture 4'.

Le fonctionnement du moyen de liaison 2' est décrit ci-après en référence aux figures 12 à 15. Ainsi, le moyen de liaison permet d'assembler une caisse 9 à un berceau de train avant 1' grâce à un boulon 5 sur la partie filetée 7 duquel est monté un écrou 8.

On suppose qu'on exerce, sur la caisse, une sollicitation notée F et perpendiculaire au boulon 5, la tôle se trouvant immobilisée.

Dans un premier temps, la tôle se déforme, comme représenté à la figure 13, élastiquement sans mouvement de la tôle par rapport aux éléments en contact avec elle. Notamment, il n'y a pas de glissement de la tôle relativement à la rondelle 99 et la caisse 9 avec lesquels elle est en contact.

Dans un deuxième temps, comme représenté à la figure 14, quand la sollicitation augmente, les parties de tôle en contact avec la rondelle 99 et la caisse se mettent à glisser relativement à la rondelle et à la caisse. Ces parties se dégagent ainsi progressivement de leur position et commencent à se libérer de l'assemblage. Ces mouvements sont illustrés par les flèches g.

Dans un troisième temps, comme représenté à la figure 15, toujours sous l'effet de la sollicitation, les parties ou l'une des parties de tôle qui étaient initialement coincées entre la rondelle 99 et la caisse se dégagent complètement et la rondelle et l'écrou peuvent passer au travers de l'ouverture 4'. L'assemblage initial entre la caisse 9 et le berceau de train avant est alors rompu.

Grâce à une telle structure de moyen de liaison et d'assemblage, il est possible en jouant sur les paramètres de réalisation du moyen de liaison de régler la sollicitation entraînant la rupture de l'assemblage. Ceci est réalisé en ajustant la rigidité au voisinage du trou principal de passage de vis. Il est ainsi possible de régler le rapport d'intensité existant entre la sollicitation limite de rupture de l'assemblage et la sollicitation limite d'élasticité de l'assemblage.

Un deuxième exemple de mode de réalisation d'un moyen de liaison 2" selon l'invention est décrit ci-après en référence aux figures 7 et 8.

Les éléments référencés 20 à 25 sont équivalents aux éléments référencés 10 à 15 sur les figures 5 et 6. Ce mode de réalisation diffère du premier en ce que les paramètres de réalisation de l'ouverture 4" sont différents. Notamment, les intersections entre le trou principal et les segments 13 sont situés à plus grande distance de l'axe horizontal et les rayons de raccordement peuvent présenter un plus grand rayon, l'angle formé par les segments 12 et 13 pouvant alors prendre, à valeur d'exemple, 50°.

Un troisième exemple de mode de réalisation d'un moyen de liaison 2"' selon l'invention est décrit ci-après en référence à la figure 9. Dans ce mode de réalisation, le moyen de liaison 2"' comprend une tôle 3"' munie d'une ouverture 4"'. L'ouverture comprend un trou principal 30 de section circulaire et destiné au passage de vis et deux trous auxiliaires 31 de section circulaire. Les trous auxiliaires 31 sont disposés symétriquement par rapport au trou principal. Les trous auxiliaires sont séparés du trou principal par des isthmes 32 d'une largeur e comprise entre 1 mm et 5 mm typiquement.

Le fonctionnement de rupture d'un assemblage présentant un moyen de liaison selon le troisième mode de réalisation est différent de celui des deux premiers modes. En effet, avant que l'écrou ou la tête de vis puisse passer au travers de l'ouverture 4"', les isthmes 32 doivent se rompre sous l'effet de contraintes de traction dues à la sollicitation exercée sur l'assemblage. Le fonctionnement présente néanmoins, avec celui des modes différents, la similitude suivante : les trous auxiliaires permettent de créer, dans la tôle, une zone de rigidité moindre localement autour du trou principal.

Un quatrième exemple de mode de réalisation d'un moyen de liaison 102 selon l'invention est décrit ci-après en référence à la figure 10. Cet exemple de mode de réalisation diffère du précédent en ce que les isthmes 132 sont fendus par des canaux 133.

Un cinquième exemple de mode de réalisation d'un moyen de liaison 202 selon l'invention est décrit ci-après en référence à la figure 11. Cet exemple de mode de réalisation diffère du troisième en ce que les trous auxiliaires 231 débouchent dans le trou principal 230.

Dans tous les exemples de modes de réalisation décrits, les trous auxiliaires sont agencés selon un axe horizontal et permettent, du fait de cette symétrie, de favoriser la rupture de l'assemblage sous une sollicitation réduite selon un axe privilégié, ici un axe vertical. Selon les autres directions, les sollicitations de rupture présentent des intensités différentes.

De préférence, les trous auxiliaires sont inclus dans une zone circulaire centrée sur le trou principal et dont le rayon vaut au plus 4 fois le rayon du cercle circonscrit au trou principal.

Dans tous les exemples de modes de réalisation, il est clair que l'ensemble des paramètres définissant les trous auxiliaires est notamment fonction du diamètre de la vis (et plus particulièrement de son diamètre de tête), de l'épaisseur de la tôle, de la matière constituant la tôle et de la rigidité et résistances souhaitées pour l'assemblage.

Tous les moyens de liaison décrits précédemment en relation avec les figures 5 à 11 ne sont que des exemples ne limitant en rien le principe de l'invention. De nombreuses autres formes d'ouvertures et agencements de formes d'ouvertures peuvent être mis en oeuvre sans sortir du cadre de l'invention.

Le moyen de maintien précédemment décrit, et permettant de maintenir assemblés le berceau de train avant et la caisse, est un boulon. Il pourrait cependant s'agir de tout autre moyen tel que par exemple un rivet. Les paramètres géométriques de l'ouverture sont alors adaptés aux dimensions de la tête du moyen de maintien qui doit passer au travers de l'ouverture 4' en cas de rupture de l'assemblage.

Grâce aux moyens décrits la rupture de l'assemblage peut être programmée et maîtrisée.

## Revendications

1. Moyen de liaison (2' ; 2" ; 2"' ; 102 ; 202) comprenant une tôle (3' ; 3" ; 3"') munie d'un trou principal (10 ; 20 ; 30 ; 130 ; 230) destiné au passage d'une vis, **caractérisé en ce que** la tôle est munie de trous auxiliaires (11 ; 21 ; 31 ; 131 ; 231) répartis autour du trou principal, ces trous auxiliaires permettant de diminuer localement la rigidité de la tôle au voisinage du trou principal.

2. Moyen de liaison (2' ; 2" ; 202) selon la revendication 1, **caractérisé en ce que** les trous auxiliaires (11 ; 21 ; 231) débouchent dans le trou principal.

3. Moyen de liaison (2' ; 2") selon la revendication 2, **caractérisé en ce que** les trous auxiliaires (31) ont sensiblement des formes triangulaires isocèles dont les hauteurs sont orientées vers le centre du trou principal, ces hauteurs constituant un axe de symétrie des formes triangulaires.

4. Moyen de liaison (2' ; 2") selon la revendication 1, **caractérisé en ce que** les trous auxiliaires (31) sont séparés du trou principal par des isthmes (32).

5. Moyen de liaison (2' ; 2" ; 2"' ; 102 ; 202) selon l'une des revendications précédentes, **caractérisé en ce que** les trous auxiliaires sont régulièrement répartis autour du trou principal.

6. Moyen de liaison (2' ; 2" ; 2"' ; 102 ; 202) selon l'une des revendications précédentes, **caractérisé en ce que** la tôle comprend deux trous auxiliaires.

7. Moyen de liaison (2' ; 2" ; 2"' ; 102 ; 202) selon l'une des revendications précédentes, **caractérisé en ce que** les trous auxiliaires sont inclus dans une zone circulaire centrée sur le trou principal et dont le rayon vaut au plus 4 fois le rayon du cercle circonscrit au trou principal.

8. Assemblage mécanique comprenant une première pièce (1' ; 1" ; 1"') munie d'un moyen de liaison selon l'une des revendications précédentes et une deuxième pièce (9) assemblée à la première grâce à l'action d'un moyen de maintien (5) traversant le trou principal (10 ; 20 ; 30 ; 130 ; 230) du moyen de liaison.

9. Assemblage mécanique selon la revendication précédente, **caractérisé en ce que** le moyen de maintien est un boulon (5).

10. Assemblage mécanique selon la revendication 9, **caractérisé en ce que** l'écrou (8) du boulon (5) ou la tête de la vis (6) du boulon (5) agit directement sur la tôle (3' ; 3" ; 3"').

11. Assemblage mécanique selon la revendication 9, **caractérisé en ce que** l'écrou (8) du boulon (5) ou la tête de la vis (6) du boulon (5) agit par l'intermédiaire direct d'une rondelle sur la tôle (3' ; 3" ; 3"').

12. Assemblage mécanique selon la revendication précédente, **caractérisé en ce que** la rondelle a sensiblement le même diamètre que l'écrou (8) du boulon (5) ou la tête de la vis (6) du boulon (5).

13. Véhicule automobile comprenant un assemblage mécanique selon l'une des revendications 8 à 12.
